Europäisches Patentamt

European Patent Office

Office européen des brevets

(11) Veröffentlichungsnummer : **0 336 281 B1**

(19)

(12) **EUROPÄISCHE PATENTSCHRIFT**

(45) Veröffentlichungstag der Patentschrift :
**11.03.92 Patentblatt 92/11**

(21) Anmeldenummer : **89105555.0**

(22) Anmeldetag : **29.03.89**

(51) Int. Cl.⁵ : **C02F 3/00,** G01N 33/569

(54) **Verfahren zur Steuerung biologischer Klärstufen.**

(30) Priorität : **31.03.88 DE 3811097**

(43) Veröffentlichungstag der Anmeldung :
**11.10.89 Patentblatt 89/41**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI LU NL SE**

(56) Entgegenhaltungen :
**EP-A- 0 241 042**
**US-A- 4 564 444**
**CHEMICAL ABSTRACTS, Band 102, Nr. 18, 6.**
**Mai 1985, Seite 312, Nr. 154225p, Columbus,**
**Ohio, US; H. SZWERINSKI et al.:**
**"Immunofluorescence for the quantitative de-**
**termination of nitrifying bacteria: interference**
**of the test in biofilm reactors", & APPL. MI-**
**CROBIOL. BIOTECHNOL., 1985, 21(1-2), 125-8**
**CHEMICAL ABSTRACTS, Band 109, Nr. 24, 12.**
**Dezember 1988, Seite 276, Nr. 215373d, Co-**
**lumbus, Ohio, US; T.E. CLOETE et al.: "A**
**combined membrane filter-immunofluor-**
**escent technique for the in situ identification**
**and enumeration of Acinetobacter in activated**
**sludge", & WATER RES. 1988, 22(8), 961-9**

(73) Patentinhaber : **ORPEGEN**
**MEDIZINISCH-MOLEKULARBIOLOGISCHE**
**FORSCHUNGSGESELLSCHAFT m.b.H.**
**Czerny-Ring 22**
**W-6900 Heidelberg 1 (DE)**

(72) Erfinder : **Nader, Werner, Dr.**
**Turnerstrasse 27**
**W-6900 Heidelberg (DE)**
Erfinder : **Nebe, Carl Thomas, Dr.med.**
**Kandelbachweg 11**
**W-6802 Ladenburg (DE)**
Erfinder : **Nebe, Gerhard**
**Januarisstrasse 14**
**W-6802 Ladenburg (DE)**
Erfinder : **Birr, Christian, Prof.Dr.**
**Werderstrasse 35**
**W-6900 Heidelberg (DE)**

(74) Vertreter : **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86 (DE)**

EP 0 336 281 B1

## Beschreibung

Die Erfindung betrifft ein Verfahren zur Steuerung biologischer Klärstufen und zur Isolierung von Bakterien mit relevanten Stoffwechseleigenschaften.

Die Wasseraufbereitung und Beseitigung gewerblicher, industrieller und häuslicher Abwässer erfolgt in Kläranlagen bzw. Klärwerken; moderne Anlagen dieser Art weisen meist mechanische, biologische und chemische Klärstufen auf, wobei der automatisierten Steuerung der Prozeßabläufe durch Regelkreise eine äußerst wichtige Rolle zukommt.

Beim biologischen Abbau, also in biologischen Klärstufen, fällt der sogenannte Belebtschlamm an, der aus einer Mischpopulation von Mikroorganismen (Bakterien, Protozoen, gegebenenfalls auch Pilzen und Hefen) besteht, deren Zusammensetzung von der Art des Nährstoffangebots und den Milieubedingungen (Temperatur, pH-Wert, osmotischer Druck usw.) bestimmt wird.

Der Belebtschlamm, auf dem die Funktion der aeroben Reinigungsstufe eines Klärwerks beruht, ist also ein Verbund von hoch spezialisierten Mikroorganismen, wobei jeder Organismus dieses Verbundes seine eigene Aufgabe beim Abbau der Abwasserbestandteile erfüllt und sein Vorkommen im Belebtbecken wird bedingt durch die Abwasserzusammensetzung und die physikalischen und chemischen Bedingungen im Belebtbecken, wie Säuregrad, Temperatur und Sauerstoff-Partialdruck.

Die Abwasserreinigung in der biologischen Klärstufe ist somit ein biotechnologischer Prozeß, und eine erweiterte Kenntnis über die Biologie des Belebtbeckens und mikrobiologische Eingriffsmöglichkeit ist deshalb eine wichtige Voraussetzung zur Verbesserung und Steuerung der Abwasserreinigung.

Konventionelle mikrobiologische Analysenmethoden, wie sie bereits zum Beispiel zur biologischen Schlammuntersuchung durchgeführt wurden (vgl. M. Baumann und H. Lemmer, Korrespondenz Abwasser, 12 (1986) 1232-1239; H. Seiler et al., Z.f.Wasser-Abwasser-Forsch., 17 (1984) 127-133) reichen nicht aus, die meisten Bakterien der Schlammflocke schnell und zuverlässig qualitativ und quantitativ nachzuweisen. Die auf der Übertragung auf Kulturplatten beruhenden Quantifizierungsmethoden sind mit einem hohen Fehlerfaktor behaftet und können nur als semi-quantitativ bezeichnet werden. Als Alternative wurden deshalb auf Immunofluoreszenz basierende Methoden entwickelt; so beschreiben zum Beispiel B.B. Ward und M.J. Perry (Appl. Environ. Microbiol. 39 (1980) 913-918) die Bestimmung des ammoniumoxidierenden Bakteriums Nitrosococcus oceanus im Meerwasser mittels Immunofluoreszenz. B.B. Bohlool und E.L. Schmidt (Science 162 (1968) 1012-1014) beschreiben die Untersuchung von Bodenproben mittels Immunofluoreszenz.

Erst wenn es gelingt, innerhalb von wenigen Stunden (bisher waren einige Wochen erforderlich) die für die Abwasserreinigung wichtigen Bakterien zu bestimmen, so würde dies nicht nur einen enormen Erkenntniszuwachs über das dynamische Wachstumsverhalten und die Bedeutung dieser Organismen erbringen, sondern es würden damit auch neue, mikrobiologische Regelgrößen gefunden, mit deren Hilfe der Klärwerksbetreiber über konventionelle Verfahrenstechnik die Reinigungskraft seiner Belebtbecken konstanthalten oder verbessern könnte. Auch könnten jene Mikroorganismen gefunden werden, die besonders positive Leistungen bringen; diese könnten außerhalb des Belebtbeckens in Reinkultur vermehrt und dem Becken wieder zugesetzt werden.

Aufgabe der vorliegenden Erfindung ist deshalb die Bereitstellung eines Verfahrens zur Steuerung einer biologischen Kläranlage, mit dem eine schnelle und zuverlässige Bestimmung von Mikroorganismen und damit die Steuerung der Kläranlage möglich ist. Diese Aufgabe wird mit dem erfindungsgemäßen Verfahren gelöst.

Gegenstand der Erfindung ist ein Verfahren zur Steuerung einer biologischen Klärstufe vom aeroben BelebtschlammTyp, das dadurch gekennzeichnet ist, daß man einen oder mehrere der im Belebtschlamm am häufigsten vertretenen Mikroorganismen hinsichtlich seiner/ihrer Menge laufend überwacht, indem man in einer repräsentativen Probe aus dem Belebtschlamm und/oder dem Zulauf des Belebtschlammbeckens diese Mikroorganismen an fluoreszenzmarkierte, gegen die ausgewählten Mikroorganismen gerichtete Antikörper bindet oder diese Mlikroorganismen durch eine spezifische Stoffwechselleistung ein fluorogenes Substrat umsetzen läßt, die Menge der so fluoreszenzmarkierten Mikroorganismen durch Durchflußzytometrie oder mikroskopische Bildunalyse bestimmt und gleichzeitig die Gesamtmenge der vorhandenen Mikroorganismen durch Streulichtmessung und/oder Anfärben der DNS bestimmt und in Abhängigkeit von den so erhaltenen Meßwerten die Menge eines oder mehrerer der bestimmten Mikroorganismen und/oder die Wachstumsbedingungen für diese Mikroorganismen regelt.

Zweckmäßige Ausgestaltungen dieses Verfahrens sind Gegenstand der Ansprüche 2 bis 7.

Die Herstellung und Bindung der gegen die ausgewählten Mikroorganismen gerichteten Antikörper kann auf an sich bekannte Weise, wie in der Immunfluoreszenz üblich, durchgeführt werden. (Vgl. Roempp, Chemie-Lexikon, 8. Auflage, Seite 1844; B.B. Ward und M.J. Perry, lc.).

Fluorogene Substrate zur Markierung einer spezifischen, d.h. nur einem bestimmten Mikroorganismus eigenen Stoffwechselleistung sind käuflich (z.B. Fluresceindiacetat (Esteraseindikator), Fluorescein-beta-glu-

EP 0 336 281 B1

coronid (Indikator für die E.coli spezifische Glucoronidase), Fluorescein-beta-galactosid (Indikator für die Galaktosidase)), können aber auch auf bekannte Weise synthetisiert werden.

So kennzeichnet z.B. die Aufspaltung von Fluoresceindiacetat das Vorkommen von Esterasen in Bakterien, Fluorescein-beta-glucoronid ist ein spezifischer Nachweis von Glucoronidasen in Escherichia coli. Aus nicht fluoreszenten Substraten wird im allgemeinen nach enzymatischer Spaltung ein fluoreszentes Produkt freigesetzt (z.B. Fluorescein, Texas Red u.a.). Solche Reaktionen können Gruppen sowohl als auch einzelne Spezies von Bakterien charakterisieren und auch deren Isolierung mittels "fluorescence activated cell sorting" zulassen.

Erfindungsgemäß können durch derartige fluorogene Substrate intrazelluläre Stoffwechselleistungen aufgezeigt und durch Durchflußzytometrie oder mikroskopische Bildanalyse quantifiziert werden.

Die Durchflußzytometrie (Durchflußzytometrie mit Laser- oder Hg- oder Xe-Lampen-Anregung, Flowcytometry, FCM) ist eine allgemein bekannte und häufig verwendete Methode zur Analyse von Zellen jeglicher Art, wobei mehrere Parameter, wie DNA, RNA und Proteingehalt, Immunfluoreszenz, Zellgröße und Zellform gleichzeitig vermessen werden können (vgl. z.B. Bio / Technology 3 (1985) 337-356; Firmenprospekt "Zytometrie" der Firma Orpegen medizinisch-molekularbiologische Forschungsgesellschaft mbH, Heidelberg; zur apparativen Ausgestaltung auch das Firmenprospekt der Skatron A/S, N-3401 Lier). Die Auswahl der für das erfindungsgemäße Verfahren verwendeten verfahrensmäßigen und apparativen Ausführungsformen richtet sich deshalb insbesondere nach der spezifischen zu untersuchenden Probe und Probenvorbereitung, der Art des Mikroorganismus usw.

Zur Vorbereitung für die Durchflußzytometrie sollen die Proben zunächst von störenden Begleitstoffen, wie z.B. Algen und anderen Bestandteilen, die das Meßergebnis beeinflussen können, befreit werden und dazu auf geeignete Weise vorbehandelt werden. Die Bakterien werden zur Probenvorbereitung vereinzelt, dann, vorzugsweise durch Zentrifugieren, gewaschen, und in Alkohol fixiert. Die Bakterien werden dann einer Behandlung zur Hydrolyse der Ribonukleinsäuren (unter Erhalt der Deoxyribonukleinsäure) unterzogen (z.B. durch Behandlung mit alkalischem 70 %igem Alkohol), danach werden unspezifische Antikörperbindungsstellen abgesättigt (z.B. durch Überführen in alkalisch hydrolysierte 2 %ige Gelatine); dann wird Antiserum zugegeben und einwirken gelassen. Die Bakterien werden dann gewaschen, z.B. durch Zentrifugieren, und mit dem fluoreszenzmarkierten Antikörper (vorzugsweise Schweine-Anti-Kaninchenantikörper Antikörper) inkubiert.

Zur Fluoreszenzmarkierung einer Stoffwechselleistung wird die Probe zunächst vereinzelt, dann aber nicht fixiert, sondern direkt mit dem fluorogenen Substrat inkubiert. Nach nochmaligem Waschen wird die Desoxyribonukleinsäure mit einem Fluoreszenzfarbstoff (z.B. Propidiumjodid) gefärbt. Danach wird im Laser-Durchflußzytometer (z.B. der Firmen Ortho Diagnostics oder Becton-Dickinson, Coulter oder Bruker-Odam), oder z.B. auch in einem Quecksilberdampflampen-Durchflußzytometer (z.B. der Firma Skatron), vermessen.

Mit dem erfindungsgemäßen Verfahren wird somit ein neues Verfahren zur Steuerung von biologischen Kläranlagen nach dem Belebtschlamm-System bereitgestellt, bei welchem die Steuerung durch die quantitative Bestimmung verschiedener Leitorganismen erfolgt, wobei in Abhängigkeit von den Meßwerten dann entweder die in zu geringem Maße vorhandenen Mikroorganismen entsprechend zudosiert werden, oder man die Wachstumsbedingungen für diese Mikroorganismen verbessert, oder auch beide Maßnahmen gleichzeitig zur Anwendung kommen.

Im Durchflußzytometer selbst, welches zweckmäßig sowohl die Bakterien im Zulauf zur Kläranlage, als auch aus dem Belebtschlammbecken selbst bestimmen soll, muß für eine einigermaßen brauchbare Quantifizierung neben den Leitmikroorganismen auch die Gesamtmenge der Mikroorganismen mitbestimmt werden. Dies kann gleichzeitig geschehen durch Messung der Lichtstreuung, die allerdings außer den Mikroorganismen auch andere feine Partikel erfaßt (es sind deshalb gegebenenfalls empirisch bestimmte Korrekturfaktoren zu berücksichtigen), oder durch Anfärbung der DNS der Mikroorganismen, wobei dann die beiden Farbsignale gleichzeitig bestimmt werden. Vorzugsweise werden Streulichtbestimmung und Anfärbung über die DNS parallel durchgeführt, da sich hierdurch die Genauigkeit weiter steigern läßt.

Die Regelung oder Verbesserung der Wachstumsbedingungen kann insbesondere zum Beispiel durch entsprechende Anpassung des Nährstoffangebotes, des pH-Wertes und/oder der Temperatur erfolgen, und gegebenenfalls auch noch weitere Regelungsmöglichkeiten einschließen. Wenn das Nährstoffangebot zu gering ist, läßt es sich beispielsweise durch Zusatz von billigen Proteinquellen, wie zum Beispiel von Schlachthofabfällen, Blutabfällen und dergleichen, oder Kunstdünger erhöhen.

Die pH-Wert Steuerung kann auf eine an sich bekannte Weise zur Veränderung des pH-Wertes erfolgen, wie z.B. durch Zusatz geeigneter Säuren oder Basen. Eine Temperaturregelung, die unter normalen Umständen meist in einer Temperaturerhöhung besteht, kann z.B. über die Temperatur der zur Begasung eingesetzten Preßluft erfolgen.

Als zur Klärwerkssteuerung besonders wichtige und gut geeignete Bakterien sind, geordnet nach Problemkreisen, zu nennen: Typ 021N, 0961 und 1852, Sphaerotilus natans, Zooglöa spec., Pseudomonas oryzihabitans, Isolate von Acinetobacter calcoaceticus; Nitrosomonas spec., Nitrobacter spec.; Aeromonas hydrophila; Acinetobacter spec., Pseudomonas aeruginosa, fluorescens und putida, Arthrobacter spec., Rhodococcus spec.; Salmonella spec., Pasteurella spec., Shigella flexneri; Escherichia coli, Klebsiella pneumoniae.

Von diesen sind bestimmte Bakterien bestimmten Problemkreisen zuzuordnen, wie zum Beispiel der Bildung von Blähschlamm, der Oxidation von Ammonium zu Nitrat, der Eliminierung von Phosphat, der Metabolisierung schwer abbaubarer Substanzen (wie z.B. Aromaten, halogenierte Kohlenwasserstoffe, Aliphaten, Detergentien), der Eliminierung von pathogenen Keimen für Mensch und Tier, und der Beurteilung von Qualität und Ursprung des eingeleiteten Abwassers; durch eine geeignete Auswahl von die einzelnen Probleme regelnden Bakterien ist eine Steuerung und Regelung dieser Probleme möglich, wie z.B. der Entphosphatierung und der Nitrifikation. Auf diese Weise lassen sich z.B. die Entphosphatierung und/oder die Nitrifikation getrennt steuern und regeln, indem man die entsprechenden, für den Abbau verantwortlichen Mikroorganismen zudosiert oder ihre spezifischen Wachstumsbedingungen verändert. Über ein fluorogenes Substrat können außerdem Bakterien, die zu bestimmten Stoffwechselleistungen fähig sind, markiert und mittels "fluorescence activated cell sorting" isoliert werden. So können ohne aufwendige Screening- und Selektionsverfahren bestimmte Abbauspezialisten, die z.B. schwer abbaubare Substrate metabolisieren, isoliert, außerhalb des Klärwerks kultiviert und dem Belebtbecken wieder zugesetzt werden.

Nachfolgend wird am Beispiel eines Klärwerks die Erfindung näher erläutert, ohne sie darauf zu beschränken.

Für eine Analyse der Bakterienbiozönose eines Klärwerks mit dem Ziel, ihr dynamisches Wachstumsverhalten beschreiben zu können, wurde zunächst eine Isolation und Charakterisierung der beteiligten Mikroorganismen mit herkömmlichen mikrobiologischen Methoden vorgenommen, und zwar für jene Bakterien, die die organische Schmutzfracht des Abwassers abbauen.

Die nachfolgende Tabelle 1 zeigt Bakterienstämme, die in reiner Form aus der Biozönose des untersuchten Klärwerks in der Zeit vom Oktober 1986 bis Juli 1987 isoliert und identifiziert wurden.

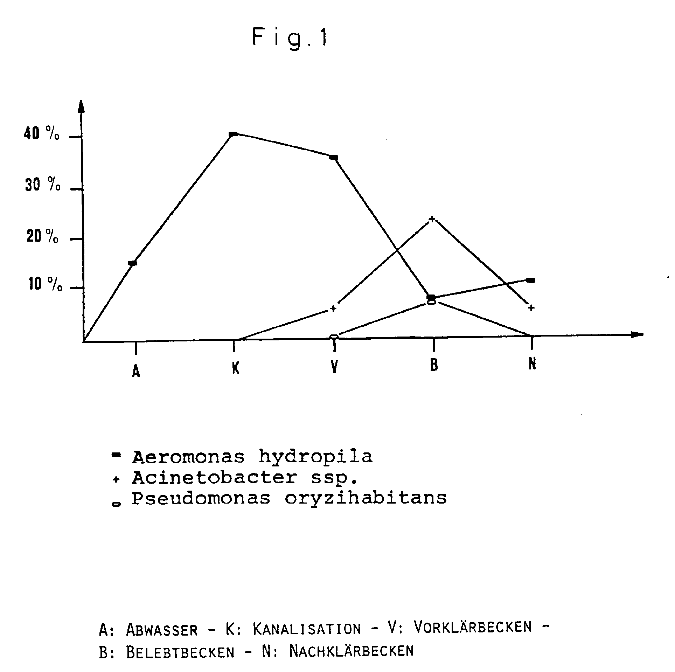

Aus der Tabelle 1 ist ersichtlich, daß im Klärwerk eine Vielzahl von Bakterienstämmen angetroffen werden. Für eine Beschreibung des dynamischen Zustandes des Klärwerks ist deshalb die Beschränkung auf einige wesentliche Leitorganismen unabdingbar. Zur Erkennung der Leitorganismen wurde mit konventionellen Methoden eine semi-quantitative Bestimmung der Bakterienhauptgruppen durchgeführt und drei Organismen aufgrund ihres Wachstumsverhaltens in der Kanalisation, Vorklärung und im Belebtbecken ausgewählt. (Vgl. Figur 1).

Die quantitative Bestimmung von Bakterien in einer Mischung von konventionellen Methoden basiert hauptsächlich auf dem Plattierungsverfahren (vgl. M. Baumann und H. Lemmer, lc.), bei dem Bakterien auf die Nähragaroberfläche einer Petrischale ausgestrichen, auf diesem Agar zu Kulturen anwachsen und dann ausgezählt und isoliert werden. In einem verbesserten Verfahren zur Analyse der Bakterienhauptgruppen (sogenannte Stempelmethode) werden Klärschlammbakterien zunächst durch die Scherkräfte in einem Homogenisator vereinzelt und dann auf Agar ausplattiert. Das Material wird so weit verdünnt, daß auf dem Agar gut vereinzelte Kolonien anwachsen, die dann mit einem Stempel aus Agar-Agar auf neue Platten mit Selektivmedien überführt werden. Diese Selektivmedien enthalten diverse Hemmstoffe, die nur von bestimmten Gattungen toleriert werden (vgl. auch H. Seiler et al., lc.). Außerdem sind Farbindikatoren enthalten, deren Umschlag eine besondere stoffwechselphysiologische Leistung des Bakteriums anzeigt. Wegen der Stempelübertragung läßt sich jede einzelne Kolonie auf die Ausgangsplatte zurückverfolgen. Man erhält zu

Tabelle 1: Bakterienstämme, die in reiner Form aus der Biozönose des Klärwerks in der Zeit vom Oktober bis Juli isoliert und identifiziert wurden.

| Gattung | Spezies | Nr.*) | Subspezies | Abgeschätzte Häufigkeit | Vorkommen |
|---|---|---|---|---|---|
| Acinetobacter | calcoaceticus | 1 | anitratus lwoffii | 5 - 20 % | |
| Aeromonas | caviae | 2 | | ve **) | |
| | hydrophila | 3 | | 0 - 15 % | aus Kanalisation und Vorklärung |
| | salmonicida | 4 | | ve | |
| Alcaligenes | faecalis | 5 | odorans | 1 % | |
| | denitrificans | 6 | | | |
| Arthrobacter | spec | 7 | | 1 - 10 % | |
| Bacillus | spec | 8 | | ve ***) | typisches Bodenbakterium mit Dauersporen |
| Enterobacter | agglomerans | 9 | | | typische Darmbak-terien |
| | omniserus | 10 | | ve **) | |
| | cloacae | 11 | | | |
| Escherichia | coli | 12 | | ve **) | typisches Darmbakterium |
| Flavobacterium | spec | 13 | | 1 - 5 % | |
| Klebsiella | pneumoniae | 14 | pneumonia ocaenae | 2,5 - 20 % | aus Kanalisation und Vorklärung |
| Micrococcus | luteus | 15 | | | |
| | varians | 16 | | 1 - 10 % | |
| | roseus | 17 | | | |
| Moraxella | spec | 18 | | 1 - 10 % | |

Tabelle 1 Fortsetzung

| Gattung | Spezies | Nr.*) | Subspezies | Abgeschätzte Häufigkeit | Vorkommen |
|---|---|---|---|---|---|
| Pasteurella | aerogenes | 19 | - | ve **) | Kommensalen |
| | multicida | 20 | | | von Mensch und Tier |
| Proteus | mirabilis | 21 | | 1 - 3 % | aus Kanalisation |
| | vulgaris | 22 | | | und Vorklärung |
| Pseudomonas | acidovarans | 23 | | ve **) | |
| | aeruginosa | 24 | | ve **) | |
| | alcaligenes | 25 | | ca. 10 % | |
| | fluorescens | 26 | | ca. 15 % | |
| | luteola | 26 | | 1 % | |
| | paucimobilis | 27 | | 1 % | |
| | putida | 28 | | 1 % | |
| | putrefaciens | 29 | | 1 % | |
| | oryzihabitans | 30 | | 0 - 8 % | |
| | stutzeri | 31 | | ve **) | |
| Rhodococcus | spec | 32 | | 1 % | |
| Salmonella | flexneri | 33 | | | für den Menschen |
| | paratyphiB | 34 | | 0,5 % | meist pathogenes |
| | sonnei | 35 | | | Darmbakterium |
| | typhi | 36 | | | |
| Shigella | flexneri | 37 | | | für den Menschen pathogenes Darmbakterium |
| Sphaerotilus | natans | 38 | | 0,5 % | fadenförmiges Bakterium, zusamm. mit 021N u. 0961 Blähschlammverursacher im Winter im Klärwerk Nord |
| Staphylococcus | aureus | 39 | | 1 % | Kommensale von Mensch und Tier häufig pathogen |
| Streptococcus | spec. | 40 | | 1 % | Kommensale von Mensch und Tier häufig pathogen |

Tabelle 1 Fortsetzung

| Gattung | Spezies | Nr.*) | Subspezies | Abgeschätzte Häufigkeit | Vorkommen |
|---|---|---|---|---|---|
| Xanthobacter | spec | 41 | | 0 - 3 % | |
| Xanthomonas | spec | 42 | | 1 % | |
| Yersinia | enterolytica | 43 | | ve **) | |
| Vibrio | cholerae | 44 | | | |
| | fluvialis | 45 | | ve **) | |
| Zooglöa[a)] | spec | 46 | | über 10 % | |

die nicht taxonomisch eingeordnet sind:

| | | | | | |
|---|---|---|---|---|---|
| Typ 021N | | 47 | | 0 - 50 % | fadenförmiges Bakterium und Blähschlammverursacher |
| Typ 0961 | | 48 | | 0 - 10 % | " |
| Typ 1852 | | 49 | | 0 - 2 % | " |

*) Zählung der reinen Isolate

**) ve = vereinzelt

[a)] Unter Zooglöa spec. wurden alle gram-negativen, nicht fermentativen, beweglichen und oxidasehaltigen Bakterien eingeordnet, die in Flüssigkultur in Flocken wachsen und die nicht eindeutig einer Pseudomonas-Art zuzuordnen sind.

jedem Bakterium Informationen über Hemmstoffresistenz, stoffwechsel-physiologische Leistungen und Gehalt an charakteristischen Enzymen. Aufgrund dieser Information ist es dann möglich, jede einzelne Kolonie auf der Ausgangsplatte einer der folgenden Gruppen zuzuordnen: 1. grampositive Bakterien mit den Gattungen Mikrococcus, Arthrobacter und Rhodococcus im aeroben Klärwerksbereich und Staphylococcus und Streptococcus im anaeroben Bereich und in der Kanalisation; 2. Enterobacteriaceae (Darmbakterien) und Acinetobacter; 3. Pseudomonaceae und Moraxella; Aeromonas.

Die vorstehend beschriebenen Methoden sind für Abwasseranalysen allerdings mit einem wesentlichen Nachteil behaftet: nur 10 bis 20 % der im Homogenisat unter dem Mikroskop ausgezählten Bakterien wachsen auf der Plattenkultur anschließend an. Versuche mit dem Vitalfarbstoff Rhodamin 123 zeigen, daß über 90 % der Bakterien im mikroskopischen Präparat leben und stoffwechselaktiv sind. Diese schlechte Kultivierungseffizienz auf der Agarplatte ist darauf zurückzuführen, daß nicht alle Bakterien den Übergang zwischen dem flüssigen Abwassermilieu auf die feste Agaroberfläche unbeschadet überleben. Überhaupt nicht auf Agar können die Nitrifikanten anwachsen. Das zeigt, daß die mit der Stempelmethode ermittelten Häufigkeiten durchaus mit einem Fehler von einer Zehnerpotenz behaftet sein können. Sämtliche, aus der Übertragung von Kulturplatten beruhenden Quantifizierungsmethoden können deshalb nur als semi-quantitativ bezeichnet werden.

## Anwendung der Durchflußzytometrie auf Klärwerksbakterien (erfindungsgemäßes Verfahren)

a) Mittels Immunofluoreszenz können Bakterien in einem Gemisch spezifisch markiert und damit einzelne Bakterienarten unter dem Fluoreszenzmikroskop qualitativ, mit einem Bildanalysesystem und im Durchflußzytometer auch quantitativ nachgewiesen werden.

Für die Bestimmung mittels Immunofluoreszenz werden spezifische Antikörper gegen die zu erfassenden Bakterienstämme hergestellt und an einen Fluoreszenzfarbstoff gekoppelt. Nach Inkubation der Bakterienmischkultur mit diesen Antikörpern werden nur die entsprechenden Bakterien fluoreszent gefärbt und können unter einem Fluoreszenzmikroskop nachgewiesen werden.

Die Herstellung von polyklonalen oder monoklonalen Antikörpern, die für diese Technik benötigt werden, erfolgt nach an sich bekannten Verfahren die hier nicht weiter erläutert werden sollen. Im Prinzip werden Bakterien aus einer Reinkultur abgetötet, in ein Versuchstier (Kaninchen oder Maus) injiziert und das Antiserum daraus gewonnen bzw. B-Lymphozyten daraus isoliert und für die Hybridomatechnik eingesetzt.

Obwohl die Herstellung der monoklonalen Antikörper nach der Hybridomatechnik weitaus aufwendiger ist als die Gewinnung von Antiseren, hat sie zwei entscheidende Vorteile: 1. aus einem Kaninchen kann nur eine begrenzte Menge an Antiserum gewonnen werden, während die B-Lymphozyten zu unbegrenzter Produktion des Antikörpers angeregt werden können; 2. die Versuchstiere haben bereits kurz nach der Geburt gegen Bakterien der Haut, des Darms und des Trinkwassers eine Immunantwort gebildet und gerade diese Bakterien treten in großen Mengen in Abwasserproben auf. Dies führt bei Klärschlammuntersuchungen zu unerwünschter Markierung auch dieser Bakterien. Bei monoklonalen Antikörpern existiert dieses Problem nicht.

b) Analyse von immunfluoreszent gefärbten Belebtschlammproben unter dem Fluoreszenzmikroskop

Es wurde nach der Methode von B.B. Bohlool und E.L. Schmidt (Science 162 (1968) 1012-1014) gearbeitet. Mit gegen Rhizobium (einem für die Stickstoffixierung wichtigen Bakterium) gerichteten fluoreszierenden Antikörper haben diese Autoren Bodenbakterien in Bodenproben spezifisch nachgewiesen. Dabei wurde die unspezifische Bindung der Antikörper an die elektrostatisch geladenen Bodenpartikel durch Vorinkubation mit alkalisch hydrolisierter Gelatine unterbunden. Dieses Verfahren wurde auf die Belebtschlammprobe übertragen. Die Antikörper wurden nach intravenöser Injektion von abgetöteten Bakterien der Stämme Acinetobacter und Aeromonas in Versuchskaninchen aus deren Seren gewonnen. Belebtschlammproben wurden auf Objektträger aufgetragen, bei 60°C aufgetrocknet und dann mit 96 %igem Ethanol fixiert. Das Präparat wurde dann mit einem Film von alkalisch hydrolysierter Gelatine überschichtet, der Antikörper aufgetragen, abgewaschen und dann ein fluoreszent markierter Antikörper aus dem Schwein gegen Kaninchenimmunglobulin überschichtet. Alle Bakterien, an die Kaninchenantikörper gebunden hatten, wurden so fluoreszent markiert.

Innerhalb verschiedener Belebtschlamm- und Abwasserproben konnten so Acinetobacter und Aeromonas nachgewiesen und die Häufigkeit ihres Auftretens abgeschätzt werden.

c) Analyse von mit Immunfluoreszenz und DNS-Färbung markierten Belebtschlammbakterien mit der Durchflußzytometrie

Als entscheidender Vorteil der Durchflußzytometrie gegenüber der Fluoreszenzmikroskopie erwies es sich, daß z.B. bei blauer Lichtanregung zusätzlich zum grünen Immunfluoreszenzsignal auch das rote DNS-Fluoreszenzlicht und die Lichtstreuung der Bakterien vermessen werden konnten. Da neben der Fluoreszenzmarkierung durch Antikörper auch DNS-Gehalt und Lichtstreuung einer Bakterienart relativ konstante Größen sind, läßt sich der zu quantifizierende Mikroorganismus meßtechnisch genau innerhalb einer Gesamtpopulation eingrenzen. Damit wird ein wesentlicher Nachteil der Fluoreszenzmikroskopie ausgeglichen.

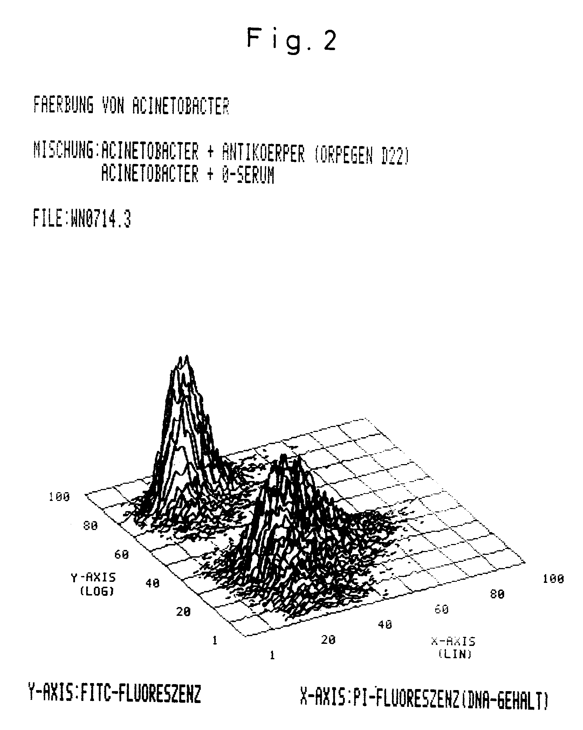

Die Figur 2 zeigt die Meßergebnisse für eine Mischung von reinen Acinetobacter-Bakterien, die einmal mit dem Nullserum des Kaninchens und einmal mit dem Serum nach Injektion abgetöteter Zellen dieses Stammes gefärbt wurden. Es sind zwei Häufigkeitsverteilungen zu erkennen, die den fluoreszenten und nicht fluoreszenten Bakterien zuzuordnen sind. Der DNS-Gehalt der Bakterien wird vom Durchflußzytometer wie erwartet als gleich eingestuft. Diese Messung entspricht dem Bild unter dem Fluoreszenzmikroskop.

Die Probenaufarbeitung erfolgte nach dem folgenden Flußdiagramm zur Vorbereitung von Bakterienproben für die Durchflußzytometrie:

1. Bakterien werden mit dem Dounce-Homogenisator vereinzelt, durch Zentrifugieren gewaschen und in 70 % Alkohol fixiert.

1 1/2 Std.

2. Danach werden sie in alkalischen 70 % Alkohol überführt, was zur Hydrolyse der Ribonukleinsäuren führt. Die Desoxyribonukleinsäure bleibt dagegen erhalten.

1 1/2 Std.

3. Bakterien werden durch Zentrifugieren gewaschen und in alkalisch hydrolisierte 2 % Gelatine überführt, was zum Abblockieren unspezifischer Antikörperbindungsstellen führt.

1 1/2 Std.

4. Antiserum wird zugegeben und wirkt für 45 Min. ein.

1 Std.

5. Bakterien werden durch Zentrifugieren gewaschen und mit fluoreszent markiertem Schweine Antikaninchenantikörper Antikörper für 15 Minuten inkubiert.

30 Min.

6. Bakterien werden gewaschen und die Desoxyribonukleinsäure mit einem Fluoreszenzfarbstoff (z.B. Propidiumjodid) gefärbt.

30 Min.

7. Vermessung im Laser-Durchflußzytometer, oder in einem Quecksilber bzw. Xenon-Lampen Durchflußzytometer.

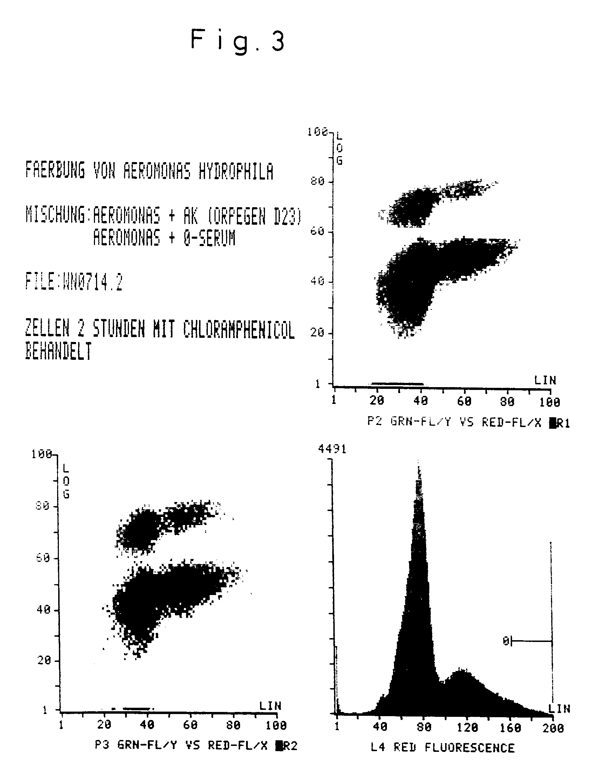

Die Figur 3 zeigt die Vermessung (Häufigkeitsverteilung) einer Mischung aus mit Nullserum und Antiserum gefärbten Aeromonas-Reinkultur. Die Aeromonaden waren mit Chloramphenicol behandelt worden, so daß vier verschiedene Populationen mit einfachem und doppeltem DNS-Gehalt und mit bzw. ohne Immunfluoreszenz im Zytometer zu erkennen waren. Die Intensitäten der grünen Immunfluoreszenz und der roten DNS-Fluoreszenzen sind in Prozent auf der Y- bzw. X-Achse aufgetragen. Jeder Punkt entspricht einem vermessenen Bakterium. Durch Behandlung der Zellen mit dem Antibiotikum Chloramphenicol wurde zusätzlich dafür gesorgt, daß nur Aeromonaden mit einfachem und doppeltem DNS-Gehalt auftreten. Man erkennt, daß die Meßtechnik in der Lage ist, sogar diese Bakteriensubpopulationen mit einfachem und doppeltem DNS-Gehalt und mit bzw. ohne Immunfluoreszenz zu unterscheiden.

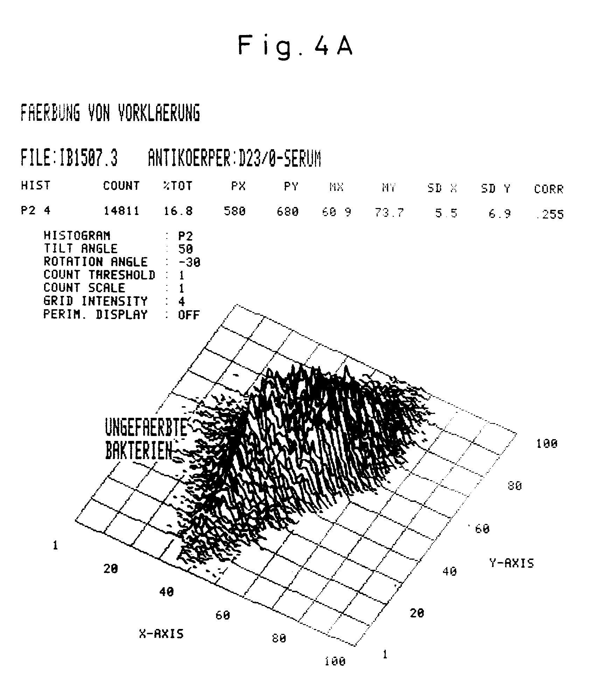

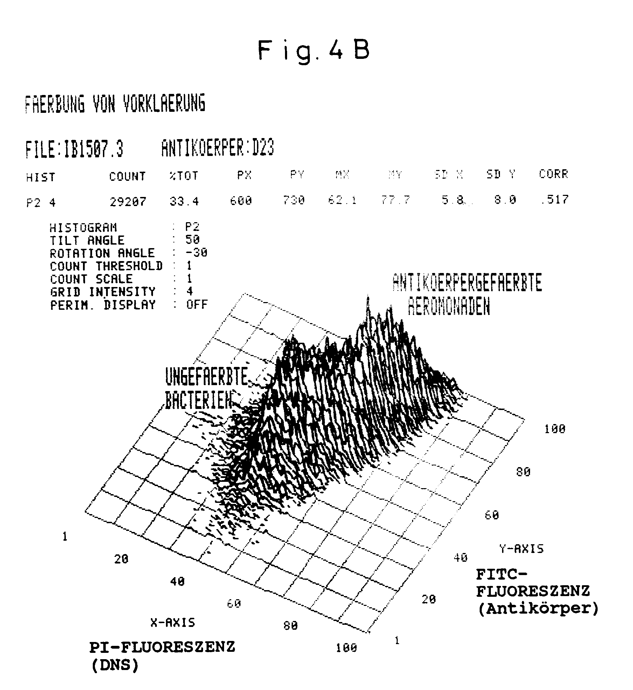

Die Figuren 4a und 4b zeigen die Vermessung der Aeromonaden im Vorklärbecken mit der Durchflußzytometrie. Die Bakterienhäufigkeiten sind gegen die grüne Immunfluoreszenz (Y-Achse) und rote DNS-Fluoreszenz X-Achse) aufgetragen. In Figur 4a war die Bakterienmischung mit Nullserum und in Figur 4b mit spezifischen Aeromonasantikörper gefärbt worden.

Es wird also die Quantifizierung von Aeromonaden aus einer Abwasserprobe heraus gezeigt. Durch die Immunfluoreszenz erscheinen die Aeromonaden in Figur 4b in einem abgegrenzten Meßbereich und können nun quantifiziert werden.

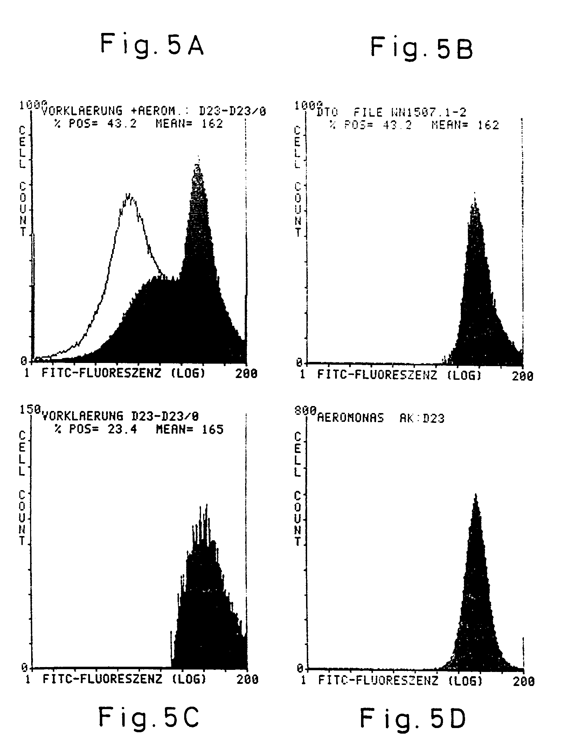

Die Figur 5a, b, c, und d zeigt die Quantifizierung von Aeromonaden in der Vorklärung mit dem Subtraktionsverfahren. Es werden zwei Verteilungen der Bakterienhäufigkeit gegen die Stärke der Immunfluoreszenz in einem Rotfluoreszenzbereich gezeigt, in dem nur Bakterien erfaßt sind, deren DNS-Gehalt dem der Aeromonaden entspricht. Die offene Kurve stellt die mit Nullseren und die geschlossene Kurve die mit Aeromonas-Antiserum markierte Vorklärprobe dar. Durch Subtraktion erhält man die Verteilung der reinen Aeromonaden und ihren Anteil an der Gesamtpopulation mit 43 %. In Figur 5d ist das Ergebnis nach Vermessung einer Aeromonas-Reinkultur dargestellt.

Unter dem Fluoreszenzmikroskop ist im Belebtschlamm ein Bakterium zu erkennen, das durch seine charakteristische Antikörperbindung an den Polen und in der Mitte auffällt. Dieser Stamm ist auf das Belebtbecken beschränkt und das zugehörige Antiserum weist nur geringe Kreuzreaktivität mit anderen Bakterien des Belebtschlamms auf. Es gelang bislang noch nicht, diesen Mikroorganismus zu identifizieren; er wurde K3 benannt.

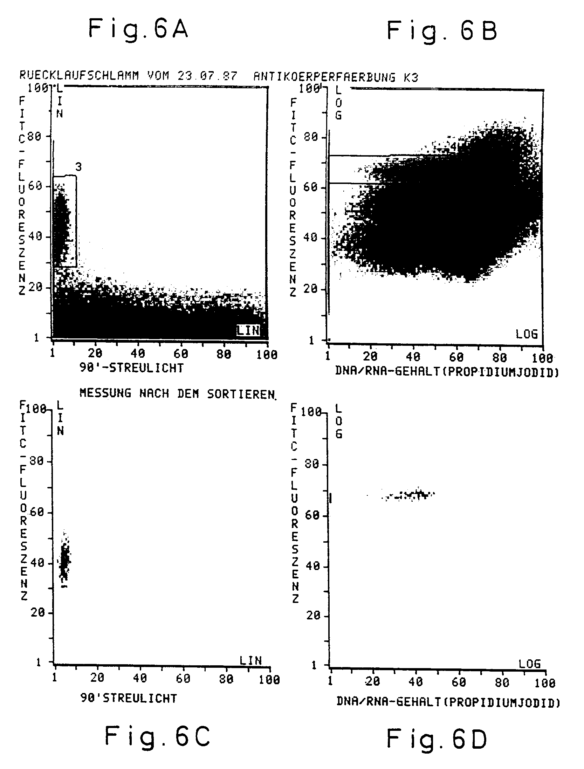

Die Figur 6 zeigt die Vermessung des Bakteriums K3 im Belebtschlamm und Heraussortierung dieses Bakteriums aus dem Gemisch. Die in Figur 6a und b mit 3 und 4 bezeichneten eingegrenzten Bereiche stecken die Meßregionen ab, die für K3 charakteristisch sind. Bakterien aus diesen Bereichen wurden heraussortiert und noch einmal in Figur 6c und 6d vermessen. Die Vermessung einer Antiserum-Belebtschlammprobe ergibt die in Figur 6a und b dargestellten Verteilungsmuster. Sowohl bei gleichzeitiger Messung der Immunfluor-

9

EP 0 336 281 B1

eszenz gegen das 90°-Streulicht als auch gegen den DNS-Gehalt fällt dieses Bakterium nur einem distinkten Meßbereich zu und kann hier ohne Subtraktion quantifiziert werden. Zusätzlich wurden mit der Zellsortierungsmaschine ("fluorescenceactivated cell sorting") Bakterien aus diesem Meßbereich heraussortiert und dann erneut im Zytometer vermessen. Wie in Figur 6c und d dargestellt, ergibt sich eine einheitliche Bakterienpopulation.

d) Vermessung einer stoffwechselphysiologischen Leistung, der Esteraseaktivität, mit der Durchflußzytometrie

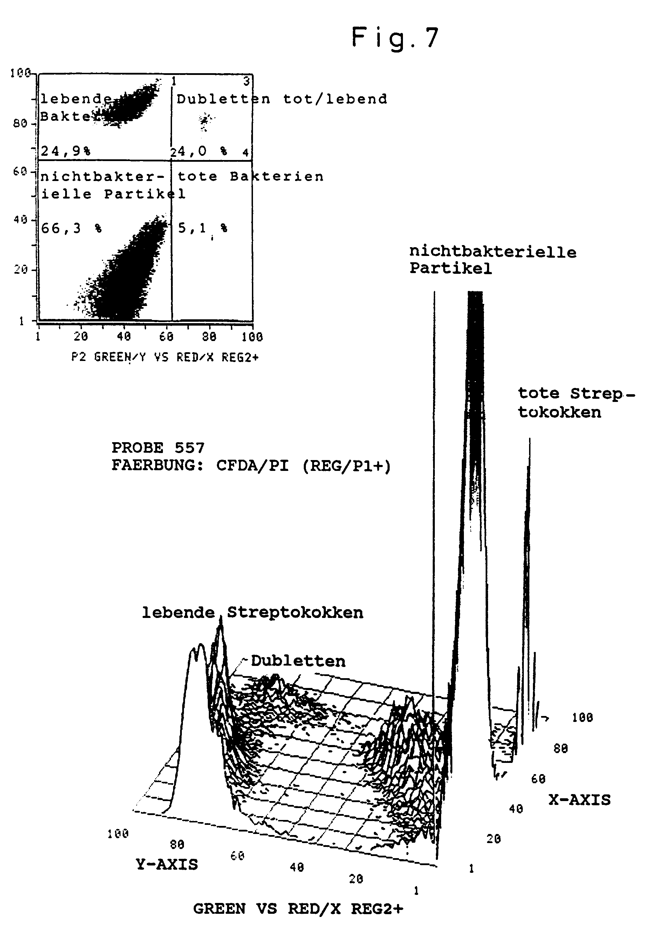

Eine Reinkultur aus Bakterien der Spezies Streptococcus faecalis (siehe Tabelle 1) wurde vereinzelt, gewaschen und dann mit dem fluorogenen Substrat Carboxyfluoresceindiacetat für 15 min inkubiert. Nach Waschen der Zellen durch Zentrifugation und Färbung mit dem Farbstoff Propidiumjodid wurden die Bakterien im Durchflußzytometer vermessen (Figur 7). Die Auswertung ergibt, daß 24,9 % der Partikel lebende Streptokokken sind, die nach Spaltung des nicht fluoreszenten Carboxyfluoresceindiacetat das grünfluoreszente Produkt Fluorescein innerhalb der Zelle eingelagert haben, aber keine Rotfluoreszenz zeigen, weil sie den DNS-Farbstoff Propidiumjodid ausschließen. 5,1 % der Bakterien sind nur rotfluoreszent, d.h. tot. 4,0 % sind Doubletten aus einer lebenden und einer toten Zelle und 66,3 % der Partikel sind keine Bakterien, sondern vermutlich Kohlenhydratpolymere, die von Streptococcus in das Nährmedium ausgeschieden werden.

Mit dieser Methode lassen sich in Proben aus Belebtschlamm und Zulauf in das Belebtbecken tote und esterasehaltige lebende Bakterien und, über das Streulicht, esterasefreie lebende Bakterien und Partikel, die keine Bakterien sind, voneinander unterscheiden und quantifizieren.

e) Erfassung von Klärwerks-Bakterien in Abhängigkeit von der Jahreszeit

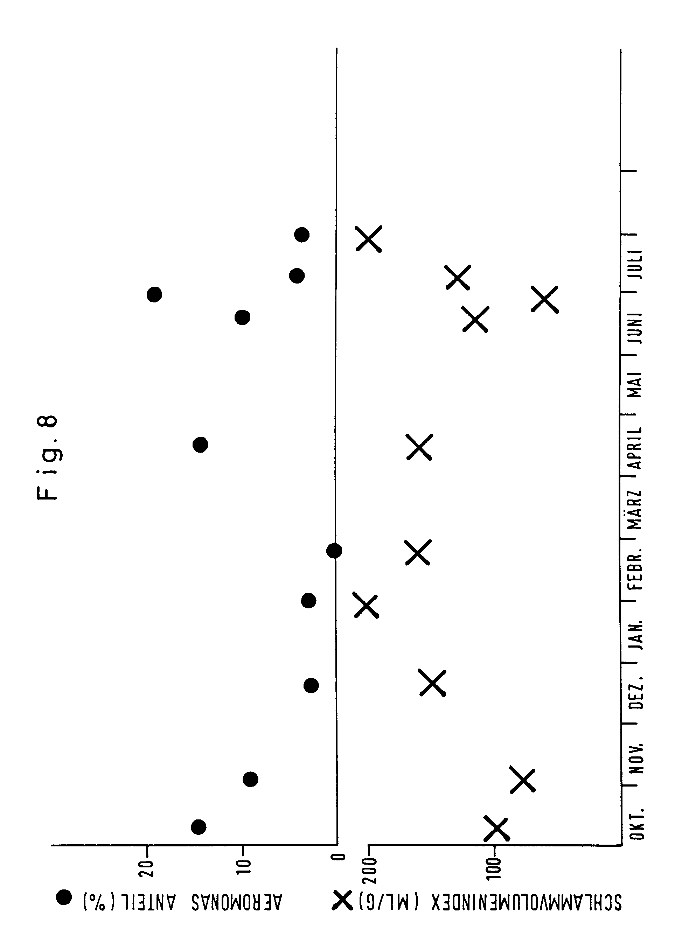

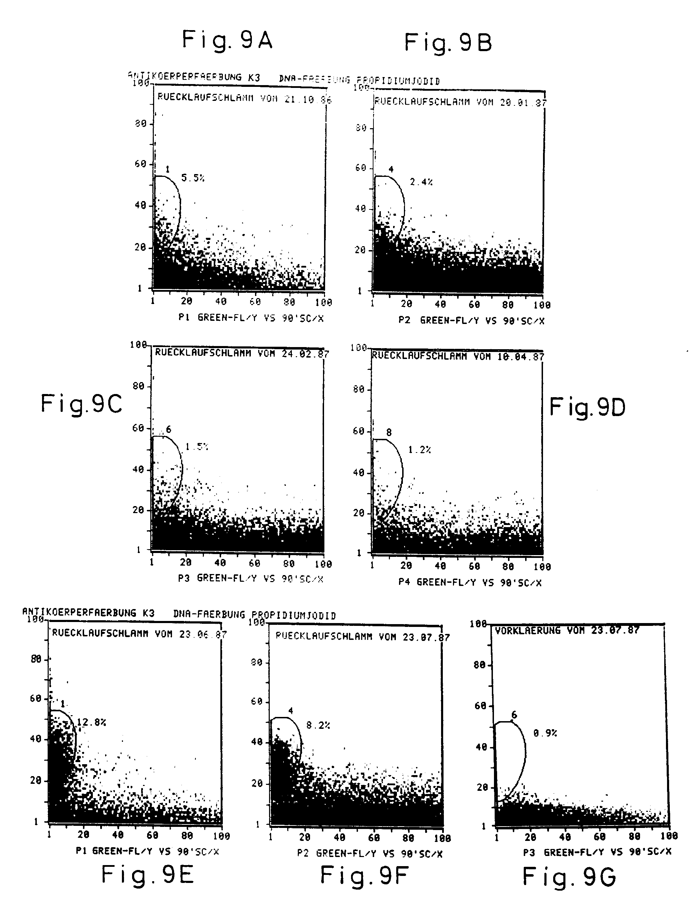

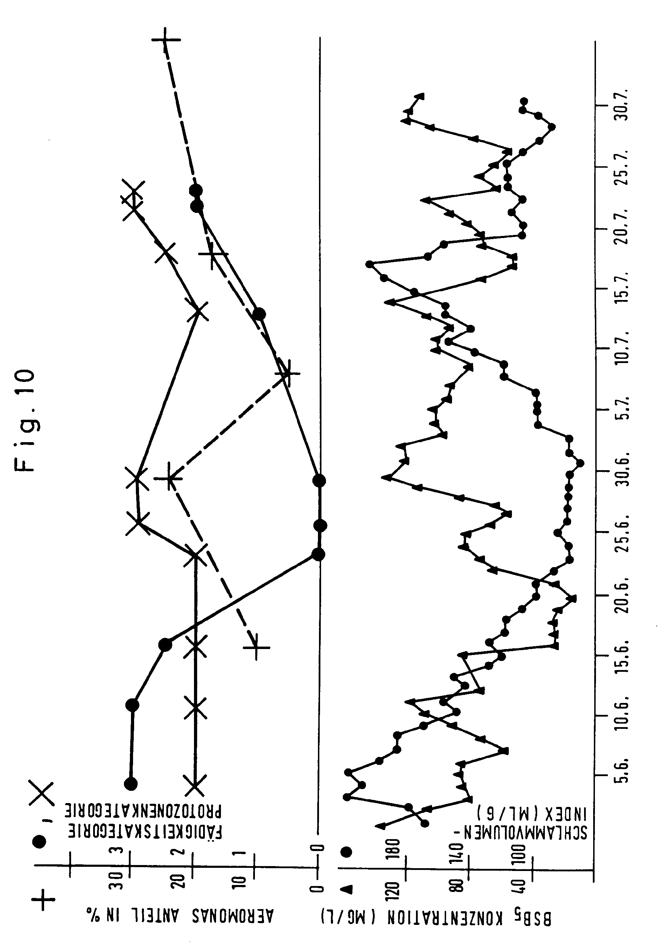

Von Oktober 1986 bis Juli 1987 wurden wöchentlich Belebtschlammproben entnommen und bei -70°C in Glycerin gefroren. Mehrere dieser Proben wurden nun aufgetaut und Aeromonaden sowohl mit der Stempelmethode als auch erfindungsgemäß in der Durchflußzytometrie quantifiziert. In den meisten Fällen wurde zwischen beiden Testverfahren Übereinstimmung gefunden. Abweichungen können mit der vorstehend beschriebenen Ungenauigkeit der Stempelmethode erklärt werden. Die Figur 8 zeigt die Häufigkeit von Aeromonas und Schlammvolumenindex im Jahreswechsel. Man kann erkennen, daß die Aeromonaden in den Wintermonaten fast vollständig aus dem Belebtbecken verschwinden. Messungen an Vorklärproben aus dieser Zeit ergeben den gleichen Befund. Auch das für das Belebtbecken spezifische Bakterium K3 verschwindet im Winter aus dem Belebtbecken (vgl. Figur 9a-g, die die durchflußzytometrische Vermessung des Bakteiums K3 im Jahreswechsel zeigt). Im Klärwerk veränderten sich in diesen Monaten die Betriebsparameter drastisch. Zusammen mit einem Absinken der Nitrifikation von 90 % auf 10 bis 20 % trat das Fadenbakterium 021N Mitte Dezember in Massen auf und führte zu einem Blähschlammproblem. Mitte Januar bis Mitte März kamen zusätzlich die weiteren Fadenbakterien Typ 0961, 1852 und Sphaerotilus natans hinzu. 021N blieb erhalten. Interessant ist ein kurzzeitiges Verschwinden von 021N für 2 Wochen in den Monaten Juni und Juli (vgl. die Figur 10, die den mikrobiologischen Zustand des Klärwerks, die BSB-Belastung des Abwassers und den Schlammvolumenindex im Juni und Juli 1987 zeigt). Vorangegangen war eine starke hydraulische Belastung des Klärwerks und ein entsprechendes Absinken der BSB-Konzentration. Parallel war ein Anstieg der Aeromonaden und, über mikroskopische Abschätzung, der Protozoen zu beobachten. Etwa 2 Wochen später trat 021N wieder verstärkt auf, wobei ein Absinken der Aeromonaden vorausgegangen war.

Diese Messungen zeigen, daß Veränderungen in der Klärwerksbiologie auf breiter Front erfolgen und sich bereits im Geschehen in der Kanalisation andeuten. Ein schnell wachsendes Bakterium wie Aeromonas erscheint tauglich, bereits zu einem sehr frühen Stadium z.B. ein Blähschlammproblem anzuzeigen. Nur mit der Durchflußzytometrie können diese potentiellen Indikatorbakterien so schnell quantifiziert werden, daß im Rahmen der Klärwerkssteuerung Gegenmaßnahmen wie Zugabe von Eisensalz, wodurch das Abtreiben des Belebtschlamms in einem frühen Stadium vermieden wird, oder Düngemittel zur Unterdrückung der den Blähschlamm verursachenden Mikroorganismen wie Typ 021N ergriffen werden können.

Dies ist ein erstes Beispiel dafür, wie mit der Durchflußzytometrie gewonnene Erkenntnisse zur Ökologie des Klärwerks und die Quantifizierung von Indikatorbakterien zur Steuerung der Kläranlage eingesetzt werden können.

Wichtig ist weiterhin die Erkenntnis, daß ein großer Teil der Bakterien im Belebtbecken nicht dort, sondern in der Kanalisation wachsen und in das Belebtbecken eingetragen werden. Sie verdauen also das Abwasser vor und können so über das Substratangebot Einfluß auf das mikrobiologische Geschehen im Belebtbecken nehmen (siehe auch Figur 1).

Ein wichtiges, bekanntes Beispiel hierfür ist die biologische Entphosphatierung. Nur, wenn das einkommende Abwasser durch Aeromonas genügend vorvergoren wird, kann es zu einer Phosphataufnahme durch Acinetobacter im Belebtbecken kommen (K. Brodisch, gwf-Wasser-Abwasser, 126 (1985) 237-240). Eine Quantifizierung von Aeromonaden mit der Durchflußzytometrie könnte für die Steuerung dieses Prozesses genutzt werden.

f) Quantifizierung von Nitrifikanten

Nitrifikanten sind eine biologisch schwer zu erfassende Gruppe, da sie sich nicht auf festem Nährboden ausplattieren lassen, und nur in flüssigen Spezialmedien mit einer Verdopplungszeit von 10 bis 24 Stunden anwachsen (zum Vergleich: die Verdopplungszeit von Aeromonas beträgt 20 Minuten). Wegen dieser Schwierigkeiten ist es unmöglich, diese für die Klärwerkstechnik wichtige Organismengruppe mit konventionellen mikrobiologischen Methoden zu quantifizieren.

Mit dem erfindungsgemäßen Verfahren ist auch hier über eine Quantifizierung eine Steuerung möglich. Es wurden je zwei Bakterienstämme isoliert, von denen einer Ammonium zu Nitrit, und der andere Nitrit zu Nitrat oxidiert. Nach Herstellung von Antikörpern gegen diese Bakterien lassen sich diese Mikroorganismen im Klärwerk beobachten.

g) Steuerungsmöglichkeiten über die erfindungsgemäße Vermessung von Indikatorbakterien, wie sie in Tabelle 1 aufgelistet sind

1. Vermeidung von Blähschlamm:

Über Immunfluoreszenz mit der mikroskopischen Bildanalyse oder Durchflußzytometrie können die Blähschlamm verursachenden Bakterien wie Typen 021N, 0961 und 1852 und Sphaerotilus natans quantifiziert, in ihrem Wachstumsverhalten beschrieben und gezielte Maßnahmen zu ihrer Bekämpfung wie Herabsetzen der Sauerstoffzufuhr, Düngung der Flockenbildner u.a. eingeleitet werden.

Die Bakterien, die eine gesunde Flockenstruktur verursachen, wie Zooglöa spec., Pseudomonas oryzihabitans und bestimmte Isolate von Acinetobacter und Arthrobacter spec., können ebenfalls in ihrem Wachstum beobachtet und gezielte Maßnahmen zu ihrer Erhaltung, insbesondere Düngemaßnahmen oder Zusatz von Impfmaterial, eingeleitet werden.

Über die Analyse des Zulaufs in das Belebtbecken können Indikatorbakterien wie Aeromonas (Indikator für Haushaltsabwasser, siehe oben), Pseudomonas fluorescens (Indikator für chemisch verunreinigtes Industrieabwasser) u.a. quantifiziert und Rückschlüsse auf die Zusammensetzung und Herkunft des Abwassers gezogen werden. Dies könnte ein Blähschlammproblem sehr früh anzeigen und die oben angeführten Gegenmaßnahmen könnten rechtzeitig eingeleitet werden.

2. Maximale Nitrifikation

Mit dem erfindungsgemäßen Verfahren kann die Konzentration der Nitrifikanten Nitrosomonas spec. und Nitrobacter spec. bestimmt und bei ihrer Abnahme folgende Gegenmaßnahmen eingeleitet werden:
Erhöhung des Schlammalters, Einbringen von Tauchkörper, Erhöhung der Beckentemperatur und Einbringen von geeignetem Impfmaterial mit hoher Nitrifikantenkonzentration.

3. Biologische Entphosphatierung

Es wird erfindungsgemäß die Konzentration der Aeromonaden und phosphatakkumulierenden Bakterien (z.B. Acinetobacter) bestimmt. Wie in Absatz e) bereits beschrieben, ist eine hohe Aeromonadenkonzentration im Zulauf ins Belebtbecken Voraussetzung für eine optimale Vergärung des Abwassers und damit Ernährung von phosphatakkumulierenden Bakterien, wie z.B. Acinetobacter im Belebtbecken mit organischen Säuren.

Über folgende Maßnahmen könnte die Konzentration dieser Bakterien konstant gehalten und damit der Prozeß gesteuert werden:
Mischung von Abwasser mit niedriger Aeromonaskonzentration zu Abwasser mit hohen Werten dieses Bakteriums zur Erreichung einer Optimalkonzentration; Zumischen von geeignetem Impfmaterial mit hohen Aeromonas- bzw. Acinetobacter-Konzentrationen.

4. Metabolisierung schwer abbaubarer Substanzen

Erfindungsgemäß werden Indikatorbakterien für die Verschmutzung des einkommenden Abwassers mit schwer abbaubaren Substanzen wie z.B. Pseudomonas fluorescensquantifiziert und über die Kanalisation bis auf den Verursacher zurückverfolgt.

Spezialisten für den Abbau dieser Substanzen werden im Belebtbecken erfindungsgemäß quantifiziert und ihre Konzentration durch Zugabe geeigneten Impfmaterials konstant gehalten. Hier kann insbesondere die Methode zur Markierung einer besonderen Stoffwechselleistung mit fluorogenen Substraten gemäß Anspruch 7 eingesetzt werden. Die Bakterienarten Acinetobacter spec.; Pseudomonas aeruginosa, fluorescens und putida; Arthrobacter spec. und Rhodococcus spec. erscheinen für die Metabolisierung schwer abbaubarer Substanzen (z.B. Aromaten, halogenierte Kohlenwasserstoffe, Aliphaten, Tenside oder Detergentien) als besonders geeignet.

5. Eliminierung pathogener Keime im Klärwerk

Für Mensch und Tier pathogene Keime (wie die in Tabelle 1 aufgelisteten Salmonella spec., Pasteurella spec., Shigella flexneri und Pseudomonas aeruginosa) werden erfindungsgemäß am Auslauf des Klärwerks in den Vorfluter quantifiziert. Bei Überschreiten bestimmter Grenzwerte wird die Verweildauer des einkommenden Abwassers im Belebtbecken erhöht und so erfahrungsgemäß eine bessere Eliminierung von pathogenen Keimen erreicht.

Einige der hier erwähnten Steuerungsmöglichkeiten von Klärwerken, wie Verweilzeit des Abwassers, Zudosierung von Bakterien oder Beckentemperatur lassen sich durch regelbare Pumpen oder Heizelemente erreichen. Als elektronische Regelgröße kann die Konzentration bestimmter Leitorganismen dienen, die erfindungsgemäß in einer auf der Durchflußzytometrie basierenden Meßerfassungstelle am Zulauf zum und im Belebtbecken selber automatisch bestimmt wird.

**Patentansprüche**

1. Verfahren zur Steuerung einer biologischen Klärstufe vom aeroben Belebtschlaumm-Typ, **dadurch gekennzeichnet,** daß man einen oder mehrere der im Belebtschlamm am häufigsten vertretenen Mikroorganismen hinsichtlich seiner/ihrer Menge laufend überwacht, indem man in einer repräsentativen Probe aus dem Belebtschlamm und/oder dem Zulauf des Belebtschlammbeckens diese Mikroorganismen an fluoreszenzmarkierte, gegen die ausgewählten Mikroorganismen gerichtete Antikörper bindet oder diese Mikroorganismen durch eine spezifische Stoffwechselleistung ein fluorogenes Substrat umsetzen läßt, die Menge der so fluoreszenzmarkierten Mikroorganismen durch Durchflußzytometrie oder mikroskopische Bildanalyse bestimmt und gleichzeitig die Gesamtmenge der vorhandenen Mikroorganismen durch Streulichtmessung und/oder Anfärbung der DNS bestimmt und in Abhängigkeit von den so erhaltenen Meßwerten die Menge eines oder mehrerer der bestimmten Mikroorganismen und/oder die Wachstumsbedingungen für diese Mikroorganismen regelt.

2. Verfahren nach Anspruch 1, **dadurch gekennzeichnet,** daß man einen oder mehrere der folgenden Mikroorganismen überwacht:

Typ 021N, 0961 und 1852, Sphaerotilus natans, Zooglöa spec., Pseudomonas oryzihabitans, Isolate von Acinetobacter calcoaceticus; Nitrosomonas spec., Nitrobacter spec.; Aeromonas hydrophila; Acinetobacter spec., Pseudomonas aeruginosa, fluorescens und putida, Arthrobacter spec., Rhodococcus spec.; Salmonella spec., Pasteurella spec., Shigella flexneri; Escherichia coli, Klebsiella pneumoniae.

3. Verfahren nach Anspruch 1 oder 2, **dadurch gekennzeichnet,** daß man einen oder mehrere Mikroorganismen überwacht, die verantwortlich sind für Blähschlamm, Nitrifikation, biologische Entphosphatierung, Metabolisierung schwer abbaubarer Substanzen, Infektionen von Mensch und Tier und/oder sich für die Beurteilung von Qualität und Ursprung des eingeleiteten Abwassers eignen.

4. Verfahren nach Anspruch 3, **dadurch gekennzeichnet,** daß man die die Entphosphatierung und/oder die Nitrifikation regelnden Mikrooganismen auswählt.

5. Verfahren nach Anspruch 1, 2 oder 3, **dadurch gekennzeichnet,** daß Leitorganismen im Abwasser und Belebtschlamm an Meßwerterfassungsstellen über das Prinzip der Durchflußzytometrie oder mikroskopische Bildanalyse quantifiziert werden und über das Meßsignal die Kläranlage gesteuert wird.

6. Verfahren nach Anspruch 5, **dadurch gekennzeichnet,** daß die Kontrolle und Steuerung vollautomatisch durchgeführt wird.

7. Verfahren nach Anspruch 1, **dadurch gekennzeichnet,** daß durch fluorogene Substrate intrazelluläre Stoffwechselleistungen angezeigt und über das Prinzip der Durchflußzytometrie oder mikroskopischen Bildanalyse quantifiziert werden.

**Claims**

1. Process for the control of a biological clarification stage of the aerobic activated sludge type, characterised in that one continuously monitors one or more of the micro-organisms most frequently present in the activated sludge with regard to its/their amount in that, in a representative sample from the activated sludge and/or from the inlet of the activated sludge tank, one allows this micro-organism to bind to fluorescence-labelled antibodies directed against the chosen micro-organisms or allows these micro-organisms to react with a fluorogenic substrate by means of a special metabolic ability, determines the amount of the thus fluorescence-labelled micro-organism by flow cytometry or microscopic image analysis and, at the same time, determines the total amount of the micro-organisms present by scattered light measurement and/or staining of the DNA and, depending upon the measurement values thus obtained, regulates the amount of one or more particular micro-organisms and/or the growth conditions for these micro-organisms.

2. Process according to claim 1, characterised in that one monitors one or more of the following micro-organisms:

type 021N, 0961 and 1852, Sphaerotilus natans, Zooglöa spec., Pseudomonas oryzihabitans, isolates of Acinetobacter calcoaceticus; Nitrosomonas spec., Nitrobacter spec., Aeromonas hydrophila, Acinetobacter spec., Pseudomonas aeruginosa, fluorescens and putida, Arthrobacter spec., Rhodococcus spec., Salmonella spec., Pasteurella spec., Shigella flexneri, Escherichia coli, Klebsiella pneumoniae.

3. Process according to claim 1 or 2, characterised in that one monitors one or more micro-organisms which are responsible for swollen sludge, nitrification, biological dephosphatisation, metabolism of substances which are difficult to break down, infections of humans and animals and/or are suitable for the assessment of the quality and origin of the waste water introduced.

4. Process according to claim 3, characterised in that one selects the dephosphatising- and/or the nitrification-regulating micro-organisms.

5. Process according to claim 1, 2 or 3, characterised in that leading organisms in the waste water and activated sludge are quantified at measurement value detection points via the principle of flow cytometry or by microscopic image analysis and the clarification plant is controlled via the measurement signal.

6. Process according to claim 5, characterised in that the control and monitoring is carried out fully automatically.

7. Process according to claim 1, characterised in that, by means of fluorogenic substrates, intracellular metabolic capabilities are indicated and quantified via the principle of flow cytometry or microscopic image analysis.


**Revendications**

1. Procédé pour commander un étage d'épuration biologique du type à boue activée, caractérisé en ce que l'on surveille en continu la quantité d'un ou de plusieurs des microorganismes représentés le plus souvent dans la boue activée, en liant ces microorganismes à des anticorps marqués par fluorescence, dirigés contre les microorganismes choisis, dans un échantillon représentatif provenant de la boue activée et/ou de l'alimentation du bassin de boue activée ou en amenant ces microorganismes à transformer un substrat fluorogène par un processus métabolique spécifique, on détermine par cytométrie en flux ou analyse microscopique d'images la quantité de microorganismes ainsi marqués par fluorescence et on détermine en même temps la quantité totale de microorganismes présents par mesure de lumière dispersée et/ou coloration d'ADN et on règle la quantité d'un ou plusieurs des microorganismes déterminés et/ou les conditions de croissance de ces microorganismes en fonction des valeurs de mesure ainsi obtenues.

2. Procédé selon la revendication 1, caractérisé en ce que l'on surveille un ou plusieurs des microorganismes suivants:

type 021N, 0961 et 1852, Sphaerotilus natans, Zooglea spec., Pseudomonas oryzihabitans, isolats de Acinetobacter calcoaceticus, Nitrosomonas spec., Nitrobacter spec., Aeromonas hydrophila, Acinetobacter spec., Pseudomonas aeruginosa, fluorescens et putida, Arthrobacter spec., Rhodococcus spec., Salmonella spec., Pasteurella spec., Shigella flexneri, Escherichia coli, Klebsiella pneumoniae.

3. Procédé selon la revendication 1 ou 2, caractérisé en ce que l'on surveille un ou plusieurs microorganismes qui sont responsables de la boue gonflée, de la nitrification, de la déphosphatation biologique, de la métabolisation de substances difficiles à dégrader, d'infections de l'homme et des animaux et/ou qui conviennent pour l'évaluation de la qualité et de l'origine de l'eau usée introduite.

4. Procédé selon la revendication 3, caractérisé en ce que l'on choisit les microorganismes qui règlent la déphosphatation et/ou la nitrification.

5. Procédé selon la revendication 1, 2 ou 3, caractérisé en ce que des organismes pilotes sont quantifiés dans l'eau usée et la boue activée en des endroits de détection des valeurs de mesure selon le principe de la cytométrie en flux ou de l'analyse microscopique des images et l'installation d'épuration est commandée par l'intermédiaire du signal de mesure.

6. Procédé selon la revendication 5, caractérisé en ce que le contrôle et la commande sont totalement automatiques.

7. Procédé selon la revendication 1, caractérisé en ce que les processus métabolises intracellulaires sont mis en évidence par des substrats fluorogènes et sont quantifiés selon le principe de la sytométrie en flux ou de l'analyse microscopique des images.

# Fig.1

- Aeromonas hydropila
+ Acinetobacter ssp.
⊖ Pseudomonas oryzihabitans

A: ABWASSER - K: KANALISATION - V: VORKLÄRBECKEN -
B: BELEBTBECKEN - N: NACHKLÄRBECKEN

# F i g. 2

FAERBUNG VON ACINETOBACTER

MISCHUNG:ACINETOBACTER + ANTIKOERPER (ORPEGEN I22)
         ACINETOBACTER + 0-SERUM

FILE:WN0714.3

Y-AXIS:FITC-FLUORESZENZ          X-AXIS:PI-FLUORESZENZ(DNA-GEHALT)

# F i g . 3

FAERBUNG VON AEROMONAS HYDROPHILA

MISCHUNG:AEROMONAS + AK (ORFEGEN D23)
AEROMONAS + 0-SERUM

FILE:WN0714.2

ZELLEN 2 STUNDEN MIT CHLORAMPHENICOL
BEHANDELT

# Fig. 4A

FAERBUNG VON VORKLAERUNG

FILE:IB1507.3    ANTIKOERPER:D23/0-SERUM

| HIST | COUNT | %TOT | PX | PY | MX | MY | SD X | SD Y | CORR |
|------|-------|------|----|----|----|----|------|------|------|
| P2 4 | 14811 | 16.8 | 580 | 680 | 60 9 | 73.7 | 5.5 | 6.9 | .255 |

```
HISTOGRAM       : P2
TILT ANGLE      : 50
ROTATION ANGLE  : -30
COUNT THRESHOLD : 1
COUNT SCALE     : 1
GRID INTENSITY  : 4
PERIM. DISPLAY  : OFF
```

# Fig. 4 B

FAERBUNG VON VORKLAERUNG

FILE:IB1507.3    ANTIKOERPER:D23

| HIST | COUNT | %TOT | PX | PY | MX | MY | SD X | SD Y | CORR |
|------|-------|------|----|----|----|----|------|------|------|
| P2 4 | 29207 | 33.4 | 600 | 730 | 62.1 | 77.7 | 5.8 | 8.0 | .517 |

```
HISTOGRAM        : P2
TILT ANGLE       : 50
ROTATION ANGLE   : -30
COUNT THRESHOLD  : 1
COUNT SCALE      : 1
GRID INTENSITY   : 4
PERIM. DISPLAY   : OFF
```

ANTIKOERPERGEFAERBTE
AEROMONADEN

UNGEFAERBTE
BACTERIEN

100

80

60

Y-AXIS

40

FITC-
FLUORESZENZ
(Antikörper)

20

1

20

40

60

X-AXIS

80

100

1

PI-FLUORESZENZ
(DNS)

## Fig. 5A

VORKLAERUNG +AEROM.: D23-D23/0
% POS= 43.2    MEAN= 162

CELL COUNT
FITC-FLUORESZENZ (LOG)

## Fig. 5B

DTO  FILE WN1507.1-2
% POS= 43.2    MEAN= 162

CELL COUNT
FITC-FLUORESZENZ (LOG)

## Fig. 5C

VORKLAERUNG D23-D23/0
% POS= 23.4    MEAN= 165

CELL COUNT
FITC-FLUORESZENZ (LOG)

## Fig. 5D

AEROMONAS  AK:D23

CELL COUNT
FITC-FLUORESZENZ (LOG)

20

# Fig.6A

RUECKLAUFSCHLAMM VOM 23.07.87  ANTIKOERPERFAERBUNG K3

# Fig. 6B

MESSUNG NACH DEM SORTIEREN.

# Fig.6C

# Fig.6D

# Fig. 7

nichtbakterielle
Partikel

tote Streptokokken

PROBE 557
FAERBUNG: CFDA/PI (REG/P1+)

lebende Streptokokken

Dubletten

X-AXIS

Y-AXIS

GREEN VS RED/X REG2+

Fig. 8

# Fig. 9A

# Fig. 9B

# Fig.9C

# Fig.9D

# Fig. 9E

# Fig. 9F

# Fig. 9G

Fig. 10